# EUROPEAN PATENT SPECIFICATION

(11) **EP 1 433 297 B1**
(45) Date of publication and mention of the grant of the patent: **21.05.2008**
(21) Application number: 02765055.5
(22) Date of filing: 30.09.2002
(51) Int. Cl.: H04L 29/06

(54) **COMPUTER FIREWALL SYSTEM AND METHOD**
VERFAHREN UND VORRICHTUNG FÜR EINEN COMPUTERFIREWALL
SYSTEME PARE-FEU INFORMATIQUE, ET PROCEDE ASSOCIE

(30) Priority: 01.10.2001 GB 0123563
(43) Date of publication of application: 30.06.2004
(73) Proprietor: Preventon Technologies Limited, Reading, Berkshire RG30 3UN (GB)
(72) Inventor: WATKINSON, Gavin, Newbury, Berkshire R20 8DN (GB)
(74) Representative: Collins, John David
(86) International application number: PCT/GB2002/004415
(87) International publication number: WO 2003/030489

(56) References cited:
- US-A- 6 137 777
- STEMPEL S: "IpAccess-an Internet service access system for firewall installations" NETWORK AND DISTRIBUTED SYSTEM SECURITY, 1995., PROCEEDINGS OF THE SYMPOSIUM ON SAN DIEGO, CA, USA 16-17 FEB. 1995, LOS ALAMITOS, CA, USA,IEEE COMPUT. SOC, 16 February 1995 (1995-02-16), pages 31-41, XP010134541 ISBN: 0-8186-7027-4
- LUCKHARDT N.: 'SCHUTZBEHAUPTUNG' CT MAGAZIN FUER COMPUTER TECHNIK, HEISE ZEITSCHRIFTEN VERLAG no. 3/1999, 01 February 1999, page 146-148, 150-152, XP000792229

## Description

The present invention generally relates to a computer firewall to protect a computer from unauthorized or undesired communications between the computer and a network.

With the increased use of networked communications between computers, and particularly with the prevalent use of the Internet, use of firewalls for protecting computers from unauthorized or undesired network communications has grown. A firewall can either be provided as a separate piece of hardware, or it can be provided as a software application within the computer to monitor and control network communications. A firewall typically operates on the basis of a set of rules controlling the types of communications which are allowed or disallowed. The rules define network resources which are allowed to be used for communications between the computer and the network. Typically, prior art firewalls require a user to have an in-depth knowledge of the communication resources such as communication protocols and ports, and the communication resources that are required to enable a service such as web access, e-mail, chat, or news groups, for example. In order to configure the prior art firewalls, complex rules are required to be input by a user to define the network control required. These rules are not only complex and require a significant level of understanding by the user, but also they can sometimes be conflicting. For example, when a new rule is input, this may undesirably override a previous rule.

Prior art servers are generally concerned with preventing incoming communications, e.g. from hackers, or to limit accessibility to servers. One such firewall is the firewall provided in the Microsoft XP (trade mark) operating system. The prior art servers do not address the problem of controlling outgoing communications from a computer i.e. to control access to services available over the network. It is desirable to control outgoing communications from a computer in order to protect against worms and the like that can infect a computer and transmit information from the computer without the knowledge of the computer user.

Another prior art firewall server for connecting a local area network to the Internet is described in S. Stempel, "IpAccess - An Internet Service Access System for Firewall Installations", (Network and Distributed System Security, 1995, Proceedings of the Symposium in San Diego, CA, USA 16-17 February 1995, Los Alamitos, CA, USA, IEEE Computer Society, 16 February 1995, pp 31-41). The firewall server is configured to grant access to services and resources of the Internet on the basis of predetermined service, host and user rights.

N. Luckhardt, "Schutzbehauptung", (c't Magazin für Computertechnik, no. 3, pp. 146-148, 150-152, February 1999) describes a prior art firewall system that implements a rule assistant which prompts a user to generate rules when a connection attempt or packet is encountered for which there is no rule. Firewall rules can also be manually created, edited and tested.

It is therefore an object of the present invention to provide a computer firewall system and method which is simpler to use and which avoids the likelihood of conflicts between rules.

According to a first aspect a computer firewall system for controlling connection to a network to allow a user to selectively access at least one service over the network, where the or each service requires connection parameters, the computer firewall comprising a user interface means arranged in operation to allow a user to select at least one service and to select to enable or disable the or each selected service a service parameter data store storing the predetermined connection parameters for the or each service; connection parameter determining means arranged in operation to determine connection parameters to be enabled or disabled based on the user selection and predetermined connection parameters for the or each service, wherein said connection parameter determining means is adapted to read the predetermined connection parameters in the service parameter data store for the or each selected service as said determined connection parameters; and control means arranged in operation to control access to the or each selected service based on said determined connection parameters.

According to a second aspect a method of controlling connection of a computer to a network to allow a user of the computer to limit network connection to selectively access at least one service over a network, where the or each service requires connection parameters, the method comprising receiving via a user interface a user selection identifying at least one service and whether the selected service is to be enabled or disabled; storing the predetermined connection parameters for the or each service; determining connection parameters to be enabled or disabled based on the user selection and predetermined connection parameters for the or each service; reading the stored predetermined connection parameters for the or each selected service as said determined connection parameters; and controlling access to the or each selected service based on said determined connection parameters.

Thus in accordance with this aspect of the present invention, the computer firewall does not require a user to have any knowledge or understanding of connection resources, or what resources are required for a service. A user is only required to specify the service or services that they require and sets of predetermined connection parameters are used to determine the connection resources which are required to provide that service. Thus this aspect of the present invention provides a far simpler user interface to a firewall than has hitherto been provided in the prior art.

A service required by a user over the network can comprise web, e-mail, news groups, file/print sharing, netmeeting or chat.

In a preferred embodiment, the user interface comprises a graphical user interface displaying the name of each service to allow a user to use a pointing device to select to enable or disable each service.

In a preferred embodiment of the present invention, the computer firewall is configured by default to disable access to all services. In this way all network connections are by default blocked. The user interface allows a user to selectively enable one or more services. The connection parameters for the selected services are determined and these parameters are used to selectively open up the access available to provide the user with the desired service whilst blocking all other connection resources not required in the instigation of the service.

In one embodiment, the connection parameters comprise at least one of a port number, and a communication protocol.

To provide the user with some degree of flexibility in configuring the firewall, in one embodiment of the present invention, the user interface allows a user to select to enable one or more ports.

In an embodiment of the present invention, the firewall can also record a log of parameters associated with communication connection attempts and the log can be displayed.

In a further embodiment of the present invention, a warning of communication connection attempts can be generated and displayed to warn a user of unauthorized or undesired connection attempts.

The present invention can be implemented as dedicated hardware, or as a programmed processing apparatus such as a suitably programmed general purpose computer. The present invention thus encompasses computer program code for controlling a computer to carry out the firewall method. The computer program code in accordance with the present invention can be provided to any suitable processing apparatus on any suitable carrier medium. The carrier medium can comprise a transient carrier medium such as an electrical, optical, radio frequency, microwave, acoustic, or electromagnetic signal (such as a signal carried over a communications network carrying the computer code, e.g. a TCP/IP protocol signal carrying computer code over an IP network such as the Internet), or a storage medium such as a floppy disk, hard disk, CD-ROM, tape device, or solid state memory device.

Embodiments of the present invention will now be described with reference to the accompanying drawings, in which:
Figure 1 is a schematic diagram of the functional components of the firewall code in accordance with an embodiment of the present invention being provided by a carrier medium to a networked computer;
Figure 2 is a schematic diagram of the architecture of a computer implementing the firewall code in accordance with an embodiment of the present invention;
Figure 3 is a schematic diagram illustrating the implementation of the control features of the firewall code in the computer in accordance with an embodiment of the present invention;
Figure 4 is a diagram of the firewall user interface for monitoring connection attempts in accordance with an embodiment of the present invention;
Figure 5 is a diagram of the user interface for obtaining more information on the connection attempts in accordance with an embodiment of the present invention;
Figure 6 is a diagram of the user interface to allow a user to selectively enable a service using the firewall in accordance with an embodiment of the present invention;
Figure 7 is a diagram of the user interface to allow a user to selectively enable a more advanced service using the firewall of one embodiment of the present invention; and
Figure 8 is a diagram of the user interface provided by the firewall to allow a user to select to be alerted when unauthorized and undesired connection attempts are made.

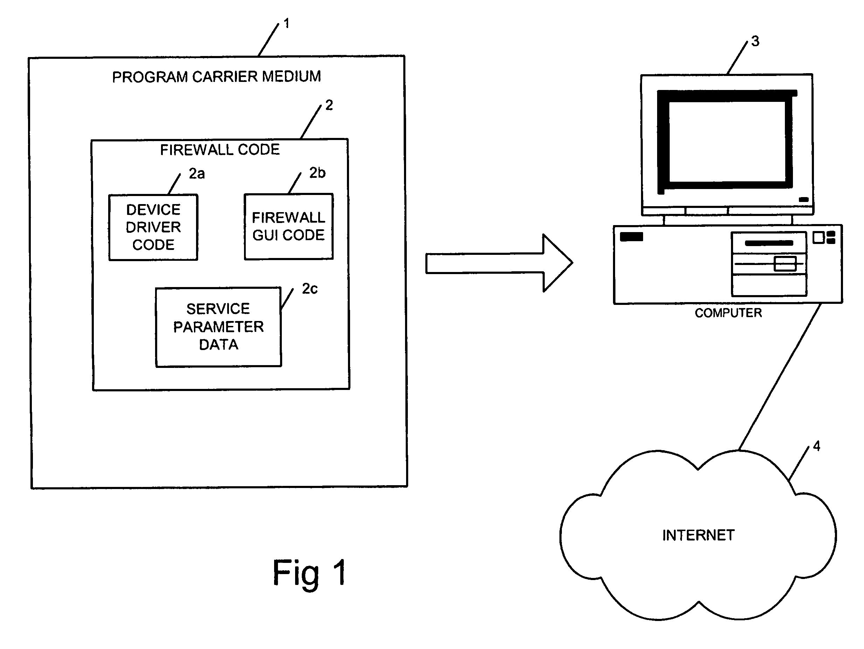

Figure 1 illustrates the configuration of the firewall code 2 applied to a program carrier medium 1 to be applied to a computer 3 connected to the Internet 4. The program carrier medium can comprise any suitable medium for carrying the firewall code. The medium 1 can comprise a transient medium, i.e. a signal carrying the firewall code 2 which is transmitted to the computer 3 where the computer 3 can install the code for execution. The signal can comprise any physical signal such as an electrical, optical, microwave, rf, magnetic, or electromagnetic signal. For example, the carrier medium can comprise a TCP/IP signal over the Internet 4 carrying the computer code in a carrier protocol such as the file transfer protocol (FTP) or hypertext transfer protocol (HTTP). Alternatively, the program carrier medium 1 can comprise a storage medium such as a floppy disk, hard disk, CD-ROM, magnetic tape, or solid state memory device.

The firewall code 2 comprises three main components:
1. The firewall graphical user interface (GUI) code 2b which comprises the code for generating the user interface and for generating the parameter data table for use by the device driver as will be described in more detail hereinafter;
2. A device driver code 2a for performing the firewall control function in accordance with the connection parameters in the connection data table; and
3. Service parameter data 2c which comprises sets of parameter data defining connection resources required for the implementation of a service.

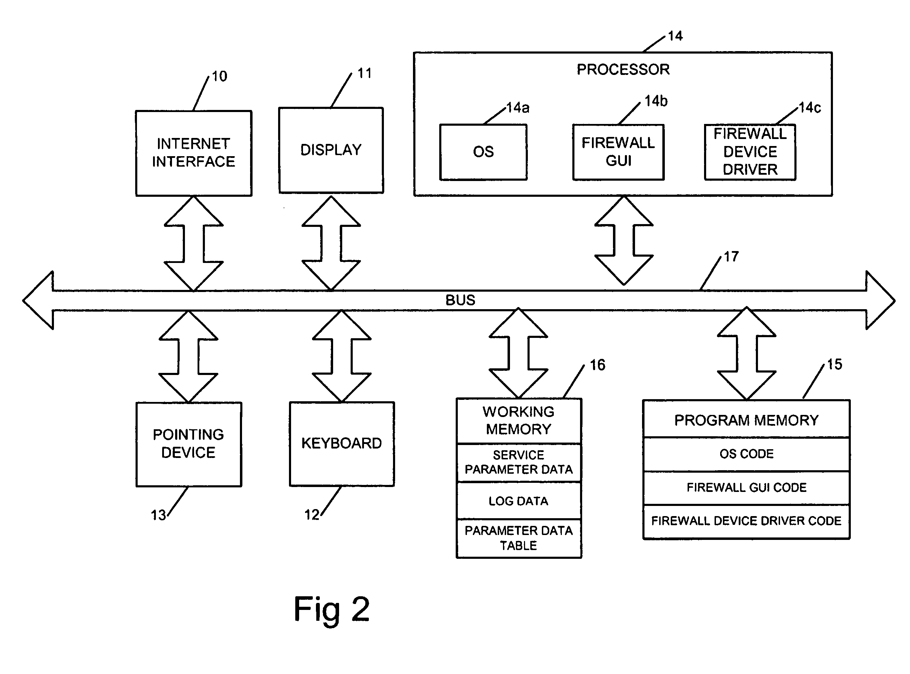

Although in Figure 1 the service parameter data 2c is illustrated as being part of the firewall code 2, the service parameter data 2c need not be hard coded within the executable code. The firewall code illustrated in Figure 2 can comprise the installation code for installing the firewall code onto the computer 3 and the service parameter data 2c can comprise a separate data file within the installation code for installing in the memory of the computer 3.

Figure 2 is a schematic illustration of the architecture of the computer 3 following the installation of the firewall code 2. The computer 3 comprises an Internet interface 10 which can comprise a modem for dial-up access, an ADSL interface for always-on connection to the Internet, or a local area network interface such as an internet card for connection to the Internet via a local area network. A display 11 is provided to display a graphical user interface to the user. A pointing device 13 is provided to enable a user to make user selections of the services to be enabled from the displayed options on the display 11. A keyboard 12 is also provided to provide the option of keyboard input. A working memory 16 is provided as volatile memory, i.e. random access memory (RAM). The working memory stores data used during the operation of the firewall. The data used comprises the service parameter data, log data comprising a log of connection attempts, and a parameter data table comprising parameter data for the service configuration selected by the user, i.e. a subset of the service parameter data. The service parameter data is also required to be stored in non-volatile memory to ensure that it is available whenever the program is implemented. Also, the log data and the parameter data table can be stored in non-volatile memory to store a continuous log of communication attempts and to ensure that the parameter data in the parameter data table can be used every time the program is started as a default set of selected parameters to avoid the user having to reselect desired services every time the firewall program is started.

A program memory 15 is provided which, during the implementation of the code, comprises a section of the non-volatile memory. Permanent non-volatile memory (not shown) is also provided for storage of the programs when not being implemented by the processor 14. The program memory 15 stores an operating system, which in this embodiment comprises Windows 95, Windows 98, Windows ME, Windows 2000 or Windows NT. The program memory 15 also stores the firewall code as two modules, firewall GUI code and firewall device driver code. The processor 14 is provided to read and implement the code stored in the program memory 15 utilizing the data in the working memory 16. The processor reads the operating system code in the program memory 15 to implement the operating system 14a. The firewall GUI code is read by the processor 14 from the program memory 15 to implement the firewall GUI 14b. The firewall device driver code is read from the program memory 15 by the processor 14 to implement the firewall device driver 14c.

Each of the components within the computer 3 are interconnected by a data and control bus 17.

It should be noted that the schematic diagram of Figure 2 illustrates the configuration during the implementation of the firewall code in which the code is loaded into the program memory and the service parameter data is loaded into the working memory. The program creates log data and the parameter data table as will be described in more detail hereinafter. Prior to loading the firewall code for implementation, the firewall code together with the service parameter data will reside in non-volatile memory, e.g. on the hard disk of computer 3.

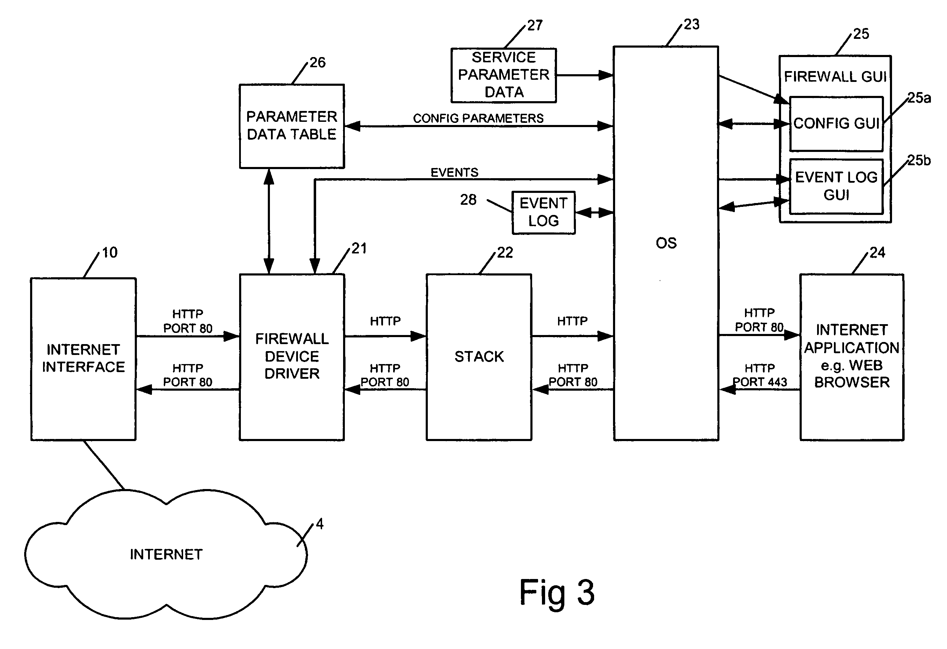

Figure 3 is a schematic diagram illustrating the implementation of the firewall in computer 3. The Internet interface 10 is connected to the Internet 4. Although in this embodiment the Internet 4 is the communications network, the present invention is applicable to any communications network. In particular, the network can comprise any network type. In this embodiment the network can be any Internet Protocol (IP) network, not just the Internet. The network can comprise an intranet, an extranet or a local area network, for example.

When the firewall code is installed in the computer 3, a firewall device driver 21 is installed to intercept all communications to and from the Internet interface 10 which comprises the physical port of the computer 3. The firewall device driver 21 intercepts communications between the Internet interface 10 and the protocol stack 22. The protocol stack 22 is controlled by the operating system 23, which in this example comprises Windows 95, Windows 98, Windows ME, Windows 2000 or Windows NT. The Internet application 24 wishing to communicate over the Internet 4 sits on top of the operating system 23 in order to set up a communication channel to the stack 22 via the firewall 21 to the Internet interface 10 to the Internet 4. In this embodiment the Internet application is a web browser and thus a web service is required to enable web browsing. Also sitting on top of the operating system 23 is the firewall GUI 25. The firewall GUI 25 provides a configuration GUI 25a to allow a user to select a service and thus configure the firewall to control communications to and from the Internet 4. The configuration GUI 25a receives user selections for services and looks up parameter data for the service in the service parameter data 27. In this way sets of parameters for the desired services can be determined and thus the configuration GUI 25a generates a parameter data table 26 defining the configuration parameters for controlling network access. The parameter data table 26 is made available by the operating system to the firewall device driver 21 which looks to the parameters in the data table to be used as the firewall rules for controlling network access.

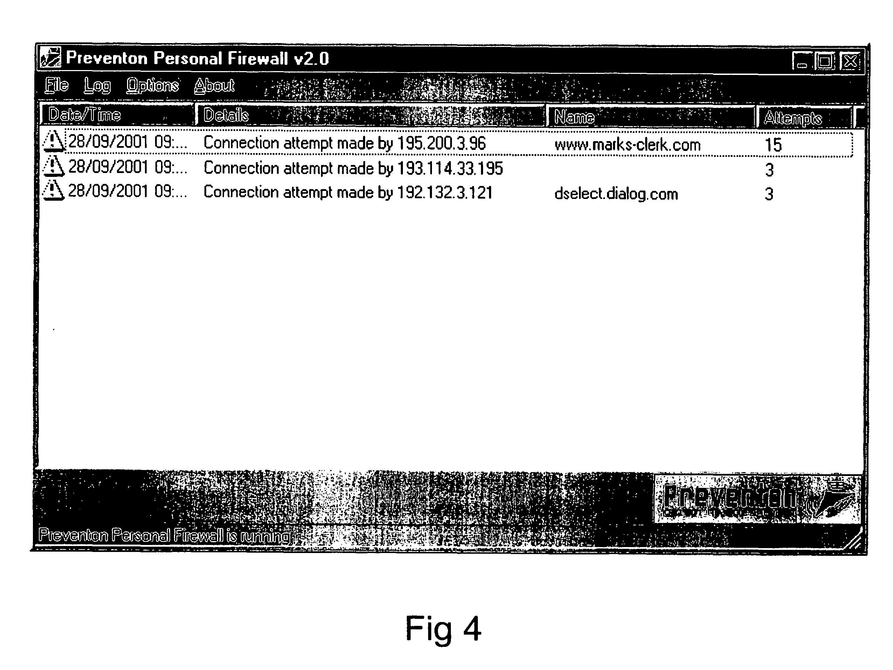

The operation of the firewall will now be described with reference to the displays of the user interfaces of Figures 4 to 8.

When the firewall code is initially installed on the computer, and if during the installation process, the user does not select to enable any services, the parameter data table 26 will be empty since no services are selected. A firewall device driver 21 will thus block all communications. In this embodiment of the present invention the communications are blocked by monitoring outgoing communication attempts. In network communications, in order to set up a network communications channel, if a communication channel is requested to be set up from outside the computer, a request is made to a computer and this has to be acknowledged. In this embodiment the network is an Internet Protocol network and in this specific embodiment, all communications using a protocol other than TCP (transmission control protocol) are blocked. For example, ICMP (internet control message protocol) is blocked by the firewall device driver 21. When TCP requests are received from outside the computer requesting the setting up of a communication channel, in this embodiment the incoming requests are allowed through to the stack 22 by the firewall device driver 21 and thus onto the target application. In order to set up a TCP communication channel, it is necessary for an acknowledgement to be sent back to the requester. It is this acknowledgement which is detected by the firewall device driver 21 and blocked. Thus, since the requester does not receive an acknowledgement response, no communication channel can be set up.

Where a connection request is generated within the computer, the firewall device driver 21 can block any outgoing connection requests. Thus, in the example illustrated in Figure 3, an attempt by an internet application, i.e. the web browser 24 to access a web page over Internet 4 will be blocked. The firewall device driver 21 detects a TCP request indicating the HTTP protocol and requesting a connection on port 80 at the target web server.

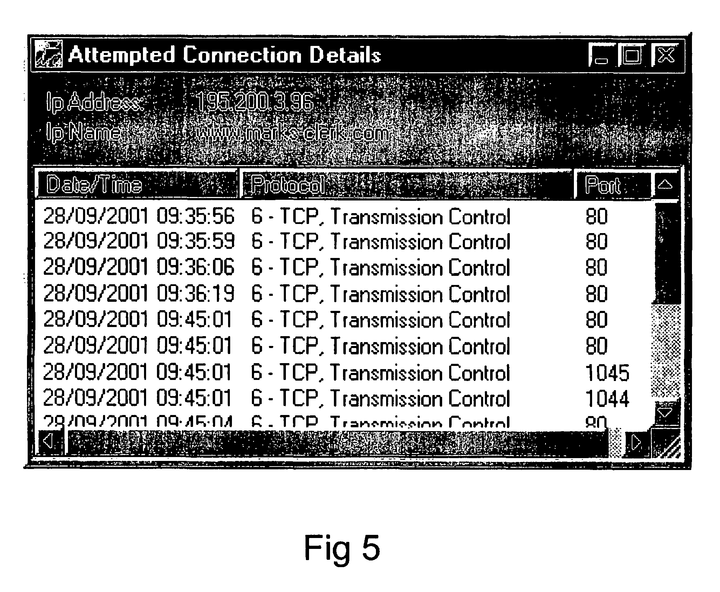

The firewall device driver 21 logs all connection attempts and the events are sent by the operating system 23 to the event log GUI 25b for storing the events in the event log 28 via the operating system 23. The event log GUI 25b can access the event log and display the events as illustrated in Figure 4. It can be seen that in the display there were 15 attempts to connect to www.marks-clerk.com. It is possible to get more information on the connection by double clicking on the log entry to bring up the event log window illustrated in Figure 5. Here, each individual connection attempt is logged showing the protocol and the port used for the connection attempt.

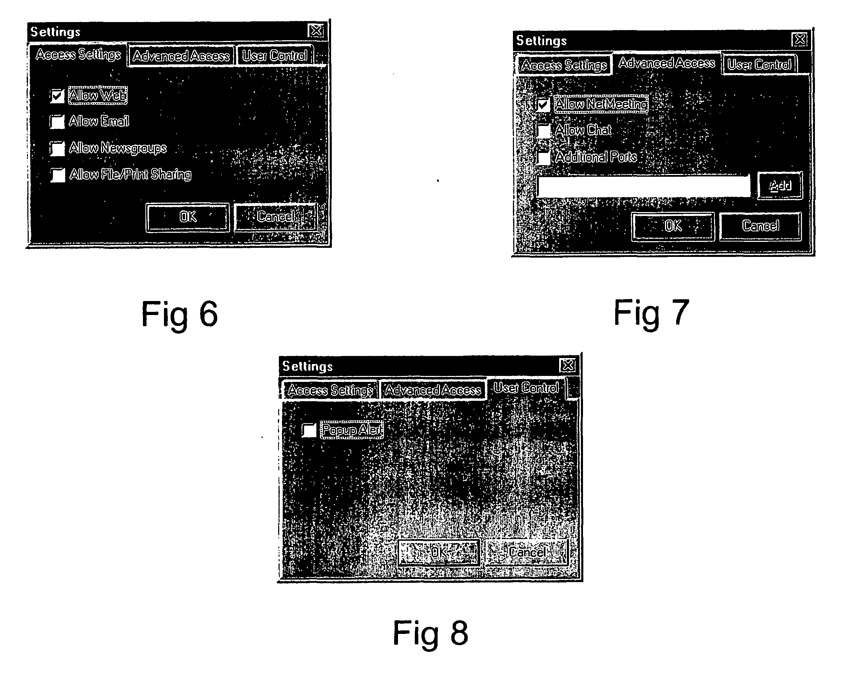

When a user wishes to enable a service, a user can select on the options menu item in the display of Figure 4 to bring up a settings window as illustrated in Figure 6 which comprises the configuration GUI 25a. The normal access settings of allowing web, e-mail, news groups and file/print sharing can be selected. In the example illustrated in Figure 6 the web service has been selected as being allowed. When OK is selected, the configuration of GUI 25a accesses the service parameter data 25 to look up the connection parameters required to enable the firewall device driver 21 to allow web access. The service parameter data 27 defining the connection resources to be made available for services is given below:

| Service | Connection Resource allowed |
|---|---|
| DNS - | Port 53 |
| | |
| Web - | FTP on Port 20 |
| - | FTP on Port 21 |
| - | TELNET on Port 23 |
| - | HTTP on Port 80 |
| - | HTTPS on Port 443 |
| | |
| Email - | POP3 on Port 110 |
| - | SMTP on Port 25 |
| - | IMAP on Port 143 |
| - | IMAP3 on Port 220 |
| - | IMAP4-SSL on Port 585 |
| - | IMAPS on Port 993 |
| | |
| Newsgroup - | NNTP on Port 119 |
| | |
| Netbios (file/print share) - | Port 137, 138 and 139 |
| | |
| Netmeeting - | Port 1503 and 1720 |
| | |
| Chat - | Port 6665, 6666, 6667, 6668, 6669 and 8002 |

It can thus be seen that when a user selects to allow the web service, the following connection resources are allowed. Communications using the FTP protocol on port 21 are allowed, communications using the FTP protocol on port 20 are allowed, communications using the TELNET protocol on port 23 are allowed, communications using the HTTP protocol on port 80 are allowed, and communications using the HTTP protocol on port 443 are allowed. All other ports and protocols are blocked. Any communication channel using a TCP or UDP protocol and port not included in the list would not be allowed by the firewall device driver 21 and would be included in the event log 28.

From the example illustrated in Figure 3, when the internet application, i.e. the web browser 24 requests a web page and the parameter data table 26 includes the connection resources allowed for the web service, the web browser 24 generates an HTTP request to connection to the target server on port 80. This is allowed through by the firewall device driver 21. In response, the target web server generates an acknowledgement and a request to the computer to connect to port 80 using the HTTP protocol. This is received by the firewall device driver 21 and stack 22 and the HTTP is passed to the web browser 24. In this way the web browser 24 receives web pages.

The configuration of GUI 25a also allows a user to select advanced access options as illustrated in Figure 7. The advanced access options allows a user to select to allow access to the services netmeeting and chat. Further, there is an ability provided to allow a user to select to enable specific ports. This requires a user to determine the port that a specific application requires in order to operate. This may be required for certain applications which do not use any of the standard port numbers. For example, online games use a variety of port numbers. Doom, for example, uses port 6000. The service parameter data 27 listed above lists the connection resources allowed for the netmeeting and chat services.

The configuration GUI 25a also allows a user to select to be warned of connection attempts. Figure 8 illustrates the ability to select "pop-up alert". When this is selected, whenever a connection attempt is made which is blocked by the firewall device driver 21, a warning window is displayed to warn the user of a failed connection attempt.

Although in the embodiment described with reference to the drawings, the firewall device driver by default blocks all connection communications unless a service has been selected, i.e. until parameters are provided in the parameter data table 26, negative logic can be applied whereby the firewall device driver 21 allows all communications and therefore all services unless a user selects to disable a service whereupon the data entered in the parameter data table 26 defines communication resources to be blocked (not communication resources to be allowed).

Although the embodiment of the present invention has been described with reference to the Internet, the present invention is applicable to any communications network such as an Internet Protocol network, e.g. an intranet, an extranet or a local area network.
Hence the protocol defined in the communication parameters for a service can comprise any network protocol. The present invention is applicable to IP protocols such as TCP, UDP and ICMP, and for non-IP protocols such as Appletalk and IPX.

The present invention can also be used to control voice communications over a network, e.g. Voice over IP (VoIP).

Although the embodiment of the present invention controls communications by controlling outgoing communication messages using the parameter data table, the present invention can be implemented by monitoring either direction or both directions.

Further, although the present invention has been described with reference to an embodiment implemented in software, the present invention is equally applicable to a hardware implemented firewall, e.g. a firewall provided as a separate piece of hardware, in which the present invention provides a more user-friendly, simple user interface for the configuration of the firewall. Thus the firewall can comprise hardware which is separate to a computer that it is protecting, or it can be integrated within the computer being protected. Further, the firewall can be implemented in software or hardware.

Although the embodiments of the present invention define specific connection resources defined by connection parameters, the present invention is applicable to any parameters defining connection resources required to facilitate a service between a computer and a communications network.

## Claims

1. A computer firewall system (21, 25, 27) for controlling connection to a network (4) to allow a user to selectively access at least one service over the network, where the or each service requires connection parameters, the computer firewall comprising:
a user interface means (25) arranged in operation to allow a user to select at least one service and to select to enable or disable the or each selected service;
a service parameter data store (27) storing the predetermined connection parameters for the or each service;
connection parameter determining means (25a) arranged in operation to determine connection parameters to be enabled or disabled based on the user selection and the predetermined connection parameters for the or each service, wherein said connection parameter determining means is adapted to read the predetermined connection parameters in the service parameters data store (27) for the or each selected service as said determined connection parameters; and
control means (21) arranged in operation to control access to the or each selected service based on said determined connection parameters.

2. A computer firewall system according to claim 1, wherein said at least one service consists of at least one of web, email, newsgroup, file/print sharing, netmeeting, or chat.

3. A computer firewall system according to claim 1 or claim 2, wherein said user interface means is adapted to generate a graphical user interface displaying the name of the or each service to allow a user to use a pointing device (13) to select to enable or disable the or each service.

4. A computer firewall system according to any preceding claim, wherein said control means (21) is adapted to, by default, disable access to all services, said user interface means (25) is adapted to allow a user to select to enable at least one service, said connection parameter determining means (25a) is adapted to determine the connection parameters to be enabled based on the user selection and said predetermined connection parameters for the or each service, and said control means is adapted to allow access to the or each selected service based on said determined connection parameters.

5. A computer firewall system according to any preceding claim, wherein said control means (21) comprises a device driver to control connections to a protocol stack (22).

6. A computer firewall system according to any preceding claim, wherein said connection parameters comprise at least one of port number and communication protocol.

7. A computer firewall system according to any preceding claim, wherein said user interface means (25) is adapted to also allow a user to select to enable one or more ports, and said control means (21) is adapted to be responsive to the user selection to enable the or each selected port.

8. A computer firewall system according to any preceding claim, including connection log means (28) for recording parameters associated with communication connection attempts and for displaying the recorded parameters.

9. A computer firewall system according to any preceding claim, including connection attempt warning means (25b) for generating and displaying a warning of communication connection attempts.

10. A method of controlling connection of a computer to a network to allow a user of the computer to selectively access at least one service over a network, where the or each service requires connection parameters, the method comprising:
receiving a user selection identifying at least one service and whether the selected service is to be enabled or disabled;
storing predetermined connection parameters for the or each service;
determining connection parameters to be enabled or disabled based on the user selection and the predetermined connection parameters for the or each service;
reading the stored predetermined connection parameters for the or each selected service as said determined connection parameters; and
controlling access to the or each selected service based on said determined connection parameters.

11. A method according to claim 10, wherein said at least one service consists of at least one of web, email, newsgroup, file/print sharing, netmeeting, or chat.

12. A method according to claim 10 or claim 11, wherein a graphical user interface (25) is generated displaying the name of the or each service to allow a user to use a pointing device (13) to select to enable or disable the or each service.

13. A method according to any one of claims 10 to 12, wherein, by default, access to all services is disabled, a user selection to enable at least one service is received, the connection parameters to be enabled are determined based on the user selection and said predetermined connection parameters for the or each service, and access to the or each selected service is allowed based on said determined connection parameters.

14. A method according to any one of claims 10 to 13, wherein the access control is performed by a device driver (21) to control connections to a protocol stack (22).

15. A method according to any one of claims 10 to 14, wherein said connection parameters comprise at least one of port number and communication protocol.

16. A method according to any one of claims 10 to 15, wherein the received user selection includes a selection to enable one or more ports, and the selected ports are enabled or disable in accordance with the user selection.

17. A method according to any one of claims 10 to 16, including recording parameters associated with communication connection attempts and displaying the recorded parameters.

18. A method according to any one of claims 10 to 17, including generating and displaying a warning of communication connection attempts.

19. A computer firewall system (14, 15 16) for controlling connection to a network (4) to allow a user to selectively access at least one service over a network, where the or each service requires connection parameters, the computer firewall comprising:
a program memory (15) storing processor readable instruction code for controlling a processor; and
a processor (14) for reading and implementing the instruction code in the program memory;
wherein the processor readable code in the program memory comprises code implementable by the processor to carry out the method of any one of claims 10 to 18.

20. A carrier medium (1) carrying computer readable code (2) for controlling a computer (3) to implement the method of any one of claims 10 to 18.

## Patentansprüche

1. Computerzugangsschutzsystem (21, 25, 27) zum Steuern einer Verbindung zu einem Netz (4), um einem Benutzer selektiven Zugang zum mindestens einem Dienst über das Netz zu ermöglichen, wobei der oder jeder Dienst Verbindungsparameter erfordert, und wobei das Computerzugangsschutzsystem umfasst:
Benutzerschnittstellenmittel (25), vorgesehen im Betrieb einem Benutzer zu gestatten mindestens einen Dienst zu wählen und zu wählen den oder jeden gewählten Dienst frei zu geben oder zu sperren;
einen Verbindungsparameterdatenspeicher (27) zum Speichern vorherermittelter Verbindungsparameter für den oder jeden Dienst;
Verbindungsparameterermittlungsmittel (25a), vorgesehen im Betrieb Verbindungsparameter zu ermitteln als freizugeben oder zu sperren, ausgehend von der Benutzerwahl und den vorherbestimmten Verbindungsparametern für den oder jeden Dienst, wobei die Verbindungsparameterermittlungsmittel eingerichtet sind, die vorherbestimmten Verbindungsparameter für den oder jeden Dienst im Verbindungsparameterdatenspeicher (27) als ermittelte Verbindungsparameter zu lesen; und
Steuermittel (21), vorgesehen im Betrieb Zugang zu dem oder jedem gewählten Dienst zu steuern, ausgehend von den ermittelten Verbindungsparametern.

2. Computerzugangsschutzsystem gemäß Anspruch 1, wobei der mindestens eine Dienst besteht aus mindestens einem gewählt von Web, E-mail, Newsgroup, gemeinsamen Daten/Drucken, Netmeeting, oder Chat.

3. Computerzugangsschutzsystem gemäß Anspruch 1 oder Anspruch 2, worin die Benutzerschnittstellenmittel eingerichtet ist eine grafische Benutzerschnittstelle erzeugen, die den Namen des oder jedes Diensts anzeigt, um einem Benutzer die Verwendung einer Zeigevorrichtung (13) zu gestatten, um zu wählen den oder jeden Dienst freizugeben oder zu sperren.

4. Computerzugangsschutzsystem gemäß einem der vorhergehenden Ansprüche, worin die Steuermittel (21) eingerichtet sind, als Voreinstellung besteht, Zugang zu allen Diensten zu sperren, die Benutzerschnittstellenmittel (25) eingerichtet sind, einem Benutzer zu gestatten, zu wählen, mindestens einen Dienst freizugeben, die Verbindungsparameterermittlungsmittel (25a) eingerichtet sind die freizugebenden Verbindungsparameter zu ermitteln, ausgehend von der Benutzerwahl und den vorherbestimmten Verbindungsparametern für den oder jeden Dienst, und die Steuermittel eingerichtet sind Zugang zu gestatten zu dem oder jedem gewählten Dienst, ausgehend von den ermittelten Verbindungsparametern.

5. Computerzugangsschutzsystem gemäß einem der vorhergehenden Ansprüche, wobei die Steuermittel (21) einen Gerätetreiber zum Steuern der Verbindungen zu einem Protokoll Speicher (22) umfasst.

6. Computerzugangsschutzsystem gemäß einem der vorhergehenden Ansprüche, wobei die Verbindungsparameter mindestens einen von Anschlussnummer und Kommunikationsprotokoll umfassen.

7. Computerzugangsschutzsystem gemäß einem der vorhergehenden Ansprüche, wobei die Benutzerschnittstellenmittel eingerichtet sind einem Benutzer auch zu gestatten, zu wählen, einen oder mehrere Anschlüsse freizugeben, und die Steuermittel (25) eingerichtet sind, auf die Benutzer-Auswahl zu reagieren, den oder jeden gewählten Anschluss freizugeben.

8. Computerzugangsschutzsystem gemäß einem der vorhergehenden Ansprüche, einschließlich Verbindungsprotokollmitteln (28) zum Aufzeichnen der den Kommunikationsverbindungsversuchen zugehörigen Parameter und zum Anzeigen der aufgezeichneten Parameter.

9. Computerzugangsschutzsystem gemäß einem der vorhergehenden Ansprüche, einschließlich Verbindungsversuchwarnmitteln (25b) zum Erzeugen und Anzeigen einer Warnung vor Kommunikationsverbindungsversuchen.

10. Verfahren zum Steuern der Verbindung eines Computers zu einem Netz, um einem Benutzer des Computers Zugang zu mindestens einem Dienst über ein Netz selektiv zu gestatten, wobei der oder jeder Dienst Verbindungsparameter erfordert, und das Verfahren umfasst:
Empfangen einer Benutzerwahl, die mindestens einen Dienst kennzeichnet, und ob der gewählte Dienst, freizugeben oder zu sperren ist;
Speichern vorherermittelter Verbindungsparameter für den oder jeden Dienst;
Ermitteln der freizugebenden oder zu sperrenden Verbindungsparameter ausgehend von der Benutzerwahl und den vorherbestimmten Verbindungsparametern für den oder jeden Dienst;
Auslesen der gespeicherten vorherbestimmten Verbindungsparameter for den oder jeden Dienst als die ermittelten Verbindungsparameter; und
Steuern des Zugangs zu dem oder jedem gewählten Dienst ausgehend von den ermittelten Verbindungsparametern.

11. Verfahren gemäß Anspruch 10, wobei der mindestens eine Dienst besteht aus mindestens einem von Web, E-mail, Newsgroup, gemeinsamen Daten/Drucken, Netmeeting, oder Chat.

12. Verfahren gemäß Anspruch 10 oder Anspruch 11, worin eine grafische Benutzerschnittstelle erzeugt wird, die den Namen des oder jedes Diensts anzeigt, um einem Benutzer die Verwendung einer Zeigevorrichtung (13) zu gestatten, um zu wählen den oder jeden Dienst freizugeben oder zu sperren.

13. Verfahren gemäß einem der Ansprüche 10 bis 12, worin als Voreinstellung, Zugang zu allen Diensten gesperrt ist, eine Benutzerwahl empfangen wird, mindestens einen Dienst freizugeben, die freizugebenden Verbindungsparameter zu ermittelt werden, ausgehend von der Benutzerwahl und den vorherbestimmten Verbindungsparametern für den oder jeden Dienst, und Zugang gestattet wird zu dem oder jedem gewählten Dienst, ausgehend von den ermittelten Verbindungsparametern.

14. Verfahren gemäß einem der Ansprüche 10 bis 13, wobei die Zugangskontrolle von einem Gerätetreiber (21) ausgeführt wird, um Verbindungen zu einem Protokollstapel (22) zu kontrollieren.

15. Verfahren gemäß einem der Ansprüche 10 bis 14, wobei die Verbindungsparameter mindestens einen von Anschlussnummer und Kommunikationsprotokoll umfassen.

16. Verfahren gemäß einem der Ansprüche 10 bis 15, wobei die Benutzerwahl eine Wahl umfasst, einen oder mehrere Anschlüsse freizugeben, und die gewählten Anschlüsse ausgehend von der Benutzerwahl freigegeben oder gesperrt werden.

17. Verfahren gemäß einem der Ansprüche 10 bis 16, einschließlich Aufzeichnen der den Kommunikationsverbindungsversuchen zugehörigen Parameter und Anzeigen der aufgezeichneten Parameter.

18. Verfahren gemäß einem der Ansprüche 10 bis 17, einschließlich Erzeugen und Anzeigen einer Warnung vor Kommunikationsverbindungsversuchen.

19. Computerzugangsschutzsystem (14, 15, 16) zum Steuern einer Verbindung zu einem Netz (4), um einem Benutzer selektiven Zugang zum mindestens einem Dienst über ein Netz zu ermöglichen, wobei der oder jeder Dienst Verbindungsparameter erfordert, und wobei das Computerzugangsschutzsystem umfasst:
einen Programmspeicher (15) zum Speichern prozessorlesbaren Anweisungscodes zum Steuern eines Prozessors; und
ein Prozessor (14) zum Lesen und Ausführen des Anweisungscodes im Programmspeicher;
wobei der prozessorlesbare Code im Programmspeicher prozessorausführbaren Code umfasst, um das Verfahren gemäß einem der Ansprüche 10 bis 18 auszuführen.

20. Trägermedium (1), das maschinell lesbaren Code (2) zum Steuern eines Computers trägt, um das Verfahren von einem der Ansprüchen 10 bis 18 auszuführen.

## Revendications

1. Système informatique de pare-feu (21, 25, 27) pour contrôler la connexion à un réseau (4) pour permettre à un utilisateur d'accéder de manière sélective à au moins un service sur le réseau, où le ou chaque service exige des paramètres de connexion, le pare-feu informatique comprenant:
un moyen d'interface utilisateur (25) adapté en service pour permettre à un utilisateur de sélectionner au moins un service et de choisir d'activer ou de désactiver le ou chaque service sélectionné ;
un stockage de données des paramètres de service (27) stockant les paramètres de connexion pour le ou chaque service;
un moyen de détermination des paramètres de connexion (25a) adapté en service pour déterminer les paramètres de connexion à activer ou désactiver sur la base de la sélection de l'utilisateur et des paramètres de connexion prédéterminés pour le ou chaque service, où ledit moyen de détermination des paramètres de connexion est adapté pour lire les paramètres de connexion prédéterminés dans la stockage de données des paramètres de service (27) pour le ou chaque service sélectionné en tant que paramètres de connexion déterminée; et
un moyen de contrôle (21) adapté en service pour contrôler l'accès au ou à chaque service sélectionné sur la base des paramètres de connexion déterminés.

2. Un système informatique de pare-feu selon la revendication 1, où ledit au moins un service consiste en au moins un des éléments suivants: toile, courrier électronique, forum de discussion, mise en commun de fichier/impression, Netmeeting ou chat.

3. Un système informatique de pare-feu selon la revendication 1 ou 2, où ledit moyen d'interface utilisateur est adapté pour générer une interface graphique d'utilisateur affichant le nom du ou de chaque service pour permettre à un utilisateur d'utiliser un dispositif de pointage (13) à sélectionner pour choisir d'activer ou de désactiver le ou chaque service.

4. Un système informatique de pare-feu selon l'une quelconque des revendications précédentes, où ledit moyen de contrôle (21) est adapté pour désactiver par défaut l'accès à tous les services, ledit moyen d'interface utilisateur (25) est adapté pour permettre à un utilisateur de choisir d'activer au moins un service, ledit moyen de détermination des paramètres de connexion (25a) est adapté pour déterminer les paramètres de connexion à désactiver sur la base de la sélection et desdits paramètres de connexion prédéterminés pour le ou chaque service, et le moyen de contrôle est adapté pour permettre l'accès au ou à chaque service sélectionné sur la base des paramètres de connexion prédéterminés.

5. Un système informatique de pare-feu selon l'une quelconque des revendications précédentes, où ledit moyen de contrôle (21) comprend un pilote de périphérique pour contrôler les connexions à une pile de protocole (22).

6. Un Système informatique de pare-feu selon l'une quelconque des revendications précédentes, où lesdits paramètres de connexion comprennent au moins un numéro de port et/ou un protocole de communication.

7. Un système informatique de pare-feu selon l'une quelconque des revendications précédentes, où ledit moyen d'interface utilisateur (25) est adapté pour permettre aussi à un utilisateur de choisir d'activer un ou plusieurs ports, et ledit moyen de contrôle (21) est adapté pour répondre au choix fait par l'utilisateur d'activer le ou chaque port.

8. Un système informatique de pare-feu selon l'une quelconque des revendications précédentes, incluant un moyen de log de connexion (28) pour enregistrer les paramètres associés aux tentatives de connexion de communication et pour afficher les paramètres enregistrés.

9. Un système informatique de pare-feu selon l'une quelconque des revendications précédentes, incluant un moyen de mise en garde de tentative de connexion (25b) pour générer et afficher une mise en garde de tentatives de connexion de communication.

10. Procédé pour contrôler la connexion d'un ordinateur à un réseau pour permettre à un utilisateur de l'ordinateur d'accéder de manière sélective à au moins un service sur un réseau, où le ou chaque service exige des paramètres de connexion, le procédé comprenant:
réception d'une sélection de l'utilisateur identifiant au moins un service et précisant si le service sélectionné doit être activé ou désactivé
stockage des paramètres de connexion à activer ou désactiver sur la base de la sélection de l'utilisateur et des paramètres de connexion prédéterminés pour le ou chaque service;
lecture des paramètres de connexion prédéterminés pour le ou chaque service sélectionné en tant que lesdits paramètres de connexion déterminés; et
contrôle de l'accès au ou à chaque service sélectionné sur la base desdits paramètres de connexion déterminés.

11. Procédé selon la revendication 10, dans lequel ledit au moins un service se compose au moins d'une toile, d'un courrier électronique, d'un forum de discussion, d'une mise en commun de fichier/impression, d'un NetMeeting ou d'un dialogue (chat).

12. Procédé selon les revendications 10 ou 11, dans lequel une interface d'utilisateur graphique (25) est générée en affichant le nom du ou de chaque service pour permettre à l'utilisateur d'utiliser le dispositif de pointage (13) à sélectionner afin d'activer ou désactiver le ou chaque service.

13. Procédé selon l'une quelconque des revendications 10 à 12, dans lequel, par défaut, l'accès à tous les services est désactivé, une sélection d'utilisateur pour activer au moins un service est reçue, les paramètres de connexion à activer sont déterminés sur la base de la sélection d'utilisateur et desdits paramètres de connexion prédéterminés pour le ou chaque service, et l'accès au ou à chaque service sélectionné est autorisé sur la base des paramètres de connexion déterminés.

14. Procédé selon l'une quelconque des revendications 10 à 13, dans lequel le contrôle d'accès est effectué par le pilote de périphérique (21) afin de contrôler les connexions à la pile de protocole (22).

15. Procédé selon l'une quelconque des revendications 10 à 14, dans lequel lesdits paramètres de connexion comprennent au moins un numéro de port et/ou un protocole de communication.

16. Procédé selon l'une quelconque des revendications 10 à 15, dans lequel la sélection d'utilisateur reçue inclut une sélection pour activer un ou plusieurs ports, et les ports sélectionnés sont activés ou désactivés en fonction de la sélection d'utilisateur.

17. Procédé selon l'une quelconque des revendications 10 à 16, incluant l'enregistrement des paramètres associés aux tentatives de connexion de communication ainsi que l'affichage des paramètres enregistrés.

18. Procédé selon l'une quelconque des revendications 10 à 17, incluant la génération et l'affichage d'une mise en garde des tentatives de connexion de communication.

19. Système informatique de pare-feu (14, 15, 16) destiné à contrôler la connexion à un réseau (4) pour permettre à un utilisateur d'accéder de manière sélective à au moins un service sur un réseau, où le ou chaque service exige des paramètres de connexion, le pare-feu informatique comprenant :
une mémoire de programme (15) stockant le code d'instruction lisible par processeur servant à contrôler un processeur ; et
un processeur (14) servant à la lecture et à l'application du code d'instruction dans la mémoire de programme ;
dans lequel le code lisible par processeur dans la mémoire de programme comprend un code pouvant être implémenté par le processeur pour mettre à exécution le procédé de l'une quelconque des revendications 10 à 18.

20. Support (1) supportant un code lisible par ordinateur (2) servant à contrôler un ordinateur (3) pour implémenter le procédé de l'une quelconque des revendications 10 à 18.
